# EUROPÄISCHE PATENTSCHRIFT

(11) **EP 2 429 755 B1**
(45) Veröffentlichungstag und Bekanntmachung des Hinweises auf die Patenterteilung: **27.03.2013**
(21) Anmeldenummer: 10730053.5
(22) Anmeldetag: 10.05.2010
(51) Int. Cl.: C03B 23/043, B23K 26/073, B23K 26/10, B23K 26/067, B23K 26/06

(54) **VORRICHTUNG UND VERFAHREN ZUR UMFANGSBEARBEITUNG EINES MATERIALSTRANGES MITTELS LASER**
DEVICE AND METHOD FOR MACHINING THE CIRCUMFERENCE OF A MATERIAL STRAND BY MEANS OF A LASER
DISPOSITIF ET PROCÉDÉ PERMETTANT L'USINAGE PÉRIPHÉRIQUE AU LASER D'UN CORDON DE MATIÈRE

(30) Priorität: 13.05.2009 DE 102009021448
(43) Veröffentlichungstag der Anmeldung: 21.03.2012
(73) Patentinhaber: Fachhochschule Jena, 07745 Jena (DE)
(72) Erfinder: HOFMANN, Otto, 99425 Weimar (DE); BLIEDTNER, Jens, 07745 Jena (DE); MÜLLER, Hartmut, 07749 Jena (DE); BISCHOFF, Jürgen, 07747 Jena (DE)
(86) Internationale Anmeldenummer: PCT/DE2010/050026
(87) Internationale Veröffentlichungsnummer: WO 2010/130255

(56) Entgegenhaltungen:
- DE-A1-102005 000 631
- US-A- 3 865 564
- US-A- 4 456 811

## Beschreibung

Die Erfindung betrifft eine Vorrichtung zur Umfangsbearbeitung eines Werkstückes, insbesondere eines Materialstranges mittels eines Lasers, wie sie gattungsgemäß aus der US 3,865,564 bekannt ist. Die Erfindung betrifft auch ein damit ausführbares gattungsgemäßes Verfahren.

Die Erfindung ist vorteilhaft anwendbar bei Prozessen, bei denen viskose Fluidströme, z. B. aus Glas, Polymeren, organischem Glas, Metall oder ähnlichen Substanzen, berührungslos eingeengt oder in Portionen aufgeteilt werden sollen.

Die Erfindung ist ebenfalls anwendbar, um feste strangförmige Werkstücke und Halbzeuge zu trennen, zu bearbeiten und ihre Materialeigenschaften entlang ihres Umfangs zu beeinflussen.

Es ist bekannt, Materialstränge aus den genannten Materialien mechanisch zu bearbeiten, wobei sich allerdings Nachteile durch Veränderung der Eigenschaften im Bearbeitungsbereich ergeben können. So führt z. B. die Verwendung von mechanischen Scheren zu Änderungen der Materialstruktur im Bereich des Schnittes, wie z. B. Verdichtungen bei metallischen Materialien, oder zu lokalen Abkühlungen von viskosen Schmelzen oder Fluiden.

Berührungslose Verfahren zur Materialbearbeitung vermindern solche nachteiligen Eigenschaftsveränderungen oder heben diese sogar gänzlich auf. Neben der Anwendung von elektrischen oder elektromagnetischen Phänomenen stellt die Verwendung hochenergetischer Strahlung, wie sie von Lasern emittiert wird, eine vielseitig anwendbare Möglichkeit der Materialbearbeitung dar.

Die Verwendung von Laserstrahlung bedingt, dass die Energie der Laserstrahlung sehr präzise auf die zu bearbeitenden Bereiche des Materials aufgebracht wird. Nur so können die erwünschten Wirkungen, wie z. B. Schmelzen, Trennen oder Härten, erreicht werden. Weiterhin ist es für eine Reihe von Anwendungen nötig, das Material über einen definierten Bereich sowohl gleichmäßig als auch gleichzeitig mit der Laserstrahlung zu beaufschlagen, um ungewollte lokale thermische Spannungen zu vermeiden.

Bei der Bearbeitung von strangförmigen Materialien ergeben sich spezielle Anforderungen an die technische und technologische Ausführung der Laserbearbeitung. Wird das zu bearbeitende Material nach oder durch die Beaufschlagung mit der Laserstrahlung von dem Strang abgetrennt, kann der Laser zusammen mit den gegebenenfalls nötigen optischen Elementen in derselben Achse angeordnet werden, in der das strangförmige Material bewegt wird (Hauptachse). Verbleibt der bearbeitete Anteil des Materials allerdings am Strang, wie es z. B. bei der Herstellung von Fasern geschieht, so muss der Laser und mindestens ein Teil der zugehörigen optischen Elemente aus der Achse des strangförmigen Materials herausgerückt werden. Trotzdem soll aber eine präzise, gleichförmige und gleichzeitige Beaufschlagung des Werkstücks über den Umfang mit der Laserstrahlung gewährleistet werden.

Um diese Anforderungen zu erfüllen, sind eine Reihe von Lösungen bekannt.

Die DE 10 2004 003 696 A1 offenbart eine ringförmige Anordnung von mehreren Lasern in einer Ebene, deren optische Achsen in radialer Richtung senkrecht zur Hauptachse des strangförmigen Materials ausgerichtet sind. In den Überschneidungsbereichen der divergierenden Laserstrahlen entsteht ein Bereich mit konstanter Energiedichte, welche eine Bearbeitung des strangförmigen Materials entlang seines Umfanges erlaubt.

Die DE 100 20 327 A1 beschreibt, wie unter Einsatz wiederum mehrerer Laser eine Bearbeitung über den ganzen Umfang eines Werkstückes möglich ist. Dabei werden die Strahlen der Laser mittels eines ringförmigen optischen Elementes in einem ringförmigen Fokus zusammengebracht. Besonders geeignet ist diese Vorrichtung für die Bearbeitung rotationssymmetrischer Werkstücke. Der ringförmige Fokus kann dabei auch durch strahlformende optische Elemente aus nur einem Laserstrahl erzeugt werden.

In der US 4,044,936 wird eine Vorrichtung aufgezeigt, mit deren Hilfe es unter Einsatz eines Laserstrahles möglich ist, röhrenförmige Hohlkörper zu bearbeiten. Dabei wird der Laserstrahl mittels optischer Elemente punktuell auf die innere oder äußere Oberfläche des Werkstückes oder Materials fokussiert. Eine durchgehende Bearbeitung der Umfangslinie kann durch die Rotation von bestimmten, im Strahlengang befindlichen optischen Elementen erreicht werden. Eine Anordnung des Lasers außerhalb der Hauptachse des Werkstückes bzw. Materials wird in zwei Ausführungsbeispielen beschrieben. Der Laserstrahl wird dabei durch mindestens einen Spiegel umgelenkt und gegebenenfalls durch weitere optische Elemente fokussiert. Die Beaufschlagung erfolgt weiterhin nur punktuell.

Eine technische Lösung zur Bearbeitung von asymmetrischen Oberflächen von Werkstücken mittels eines Lasers wird in der US 4,456,811 angegeben. Mit Hilfe segmentierter Spiegel wird ein ringförmiger Laserstrahl in einzelne Teilstrahlen zerlegt und auf die zu bearbeitende Oberfläche eines Materials oder Werkstückes gelenkt. Dadurch ist auch hier die gleichzeitige Bearbeitung entlang eines Umfanges möglich. Ziel dieser Lösung ist es, eine definierte Umwandlung der Energie des Laserstrahls im Bereich der Beaufschlagung zu bewirken. Die Hauptachse des Laserstrahles liegt dabei in der gleichen Achse wie die Hauptachse des Materials oder Werkstückes. Weiterhin ist die Einkopplung des von einem seitlich versetzt angeordneten Laser emittierten Laserstrahles in die Hauptachse des Materials oder Werkstückes mittels eines Lochspiegels offenbart. Dabei kann es allerdings zu einer C-förmigen Ausprägung des die zu bearbeitende Oberfläche beaufschlagenden Strahles kommen. Diese ungleichmäßige Verteilung der Strahlungsenergie muss durch Rotation des Materials bzw. Werkstückes kompensiert werden.

In der US 3,865,564 ist eine Vorrichtung zur Herstellung von Glasfasern unter Erhitzung eines Glasstranges als Ausgangsmaterial aufgezeigt. Der von einem außerhalb der Hauptachse befindlichen Laser emittierte Laserstrahl wird mittels einer rotierenden, exzentrisch angeordneten Linse in einen ringförmigen Strahl geformt und über einen Lochspiegel, durch dessen Öffnung die fertige Glasfaser geführt wird, in Richtung der Hauptachse des Glasstranges gelenkt. Über einen konischen Spiegel, dessen Achse mit der Hauptachse des Glasstranges zusammenfällt und der den zu bearbeitenden Glasstrang vollständig und symmetrisch umfasst, werden die Laserstrahlen auf die Oberfläche des Glasstranges gelenkt. Der Glasstrang wird durch die Beaufschlagung erhitzt und kann zu einer Faser gezogen werden. Im Bereich des konischen Spiegels werden also die von der Laserquelle kommenden und durch den Lochspiegel umgelenkten Laserstrahlen gleichmäßig auf eine definierte Breite des Umfangs des Glasstranges verteilt und es wird ein Bereich gleichmäßiger Energieverteilung geschaffen.

Die in der US 3,865,564 offenbarte Anordnung und Wirkungsweise der einzelnen Elemente ermöglicht die gleichmäßige Beaufschlagung eines strangförmigen und potenziell unendlich langen Materials oder Werkstückes in einem definierten Bereich über dessen gesamten Umfang mit Laserstrahlung. Einer einfachen Werkstückzuführung und der Bearbeitung auch heißer Werkstücke steht der genannte Lochspiegel entgegen.

Auch ist die gesamte Vorrichtung auf das zu bearbeitende Werkstück, hier eine Faser, hin dimensioniert. Zur Bearbeitung von Werkstücken mit einem wesentlich größeren Durchmesser muss die gesamte Vorrichtung in ihrer Dimensionierung angepasst werden.

Aus der US 4,012,213 ist ein Verfahren zur Herstellung von feuerfesten Fasern bekannt, die aus einem stabförmigen Material gezogen werden. Das stabförmige Material wird mit einer vorgegebenen Geschwindigkeit durch eine Heizzone bewegt. Zur Schaffung der Heizzone sind Mittel zum Aussenden von Laserstrahlung vorhanden sowie optische Mittel zum Teilen der Laserstrahlung in eine Vielzahl von Laserstrahlen, sowie zum Umlenken und Fokussieren dieser Laserstrahlen auf den Umfang des stabförmigen Materials. Es findet keine homogene Beaufschlagung des Umfangs des Materials mit Laserstrahlung statt.

Auch gemäß der US 4,058,699 wird mittels Laserstrahlung eine Heizzone in einer Heizvorrichtung geschaffen. Innerhalb eines zylinderförmigen Umfangsspiegels mit elliptischem Querschnitt sind entlang einer ersten Zylinderachse, die durch den ersten Brennpunkt des elliptischen Querschnitts verläuft, ein konischer Reflektor angeordnet und entlang einer zweiten Zylinderachse, die durch den zweiten Brennpunkt des elliptischen Querschnitts verläuft, ein zu erwärmende stabförmiges Werkstück geführt. Auf den konischen Reflektor wird eine aufgeweitete Laserstrahlung gerichtet, die nach Mehrfachreflexionen von allen Seiten her auf den Umfang des Werkstückes auftrifft. Die Laserstrahlung wird parallel zur Achse des Werkstückes in die Heizvorrichtung eingekoppelt, weshalb hier in Achsrichtung ein dafür geeigneter Bauraum vorhanden sein muss. Darüber hinaus ergeben sich für diese Vorrichtung durch die elliptische Querschnittsform des Umfangsspiegels Beschränkungen für die Einkopplung der Laserstrahlung und für die Anordnung des Werkstückes innerhalb des Umfangsspiegels.

Nachteilig an den bisherigen Lösungen sind deren hohe Komplexität, die sich unter anderem in der gleichzeitigen Anordnung mehrerer Laser oder in der Verwendung von rotierenden, optischen Elementen zeigt. Diese Maßnahmen dienen zum einen der Energieumwandlung am Ort der Bearbeitung und zum anderen der Einkopplung eines von einem seitlich angeordneten Laser emittierten Laserstrahles. Eine Bearbeitung von asymmetrischen Werkstücken erfordert eine reglungstechnisch aufwendige Nachjustierung des Laserbearbeitungssystems. Es mangelt bislang auch an einer Lösung für den Fall, dass sich das zu bearbeitende Werkstück nicht in der Mitte der Anordnung zur Laserbearbeitung befindet.

Der Erfindung liegt die Aufgabe zugrunde, eine kompakte Vorrichtung zu finden, welche eine einfache Zuführung eines Werkstückes erlaubt und die mit nur wenigen Veränderungen an die Bearbeitung von Werkstücken unterschiedlichen Querschnitts und unterschiedlicher Dimension anpassbar ist.

Es ist auch Aufgabe der Erfindung, ein alternatives Verfahren zur Bearbeitung des Umfanges eines Werkstückes mittels Laser zu finden, wobei eine Beaufschlagung des Werkstückes mit einer vorgegebenen Energieverteilung über den Umfang möglich sein soll.

Diese Aufgabe wird durch eine Vorrichtung mit den Merkmalen des Anspruches 1 und für ein Verfahren mit den Merkmalen des Anspruches 13 gelöst.

Vorteilhafte Weiterbildungen sind jeweils in den Unteransprüchen beschrieben.

Anhand der Zeichnung werden die Vorrichtung und das Verfahren im Folgenden beispielhaft näher erläutert.

Es zeigen:
- Fig. 1: eine Prinzipskizze für eine erfindungsgemäße Vorrichtung
- Fig. 2a: den Verlauf eines Strahlenbündels in der Y-Z-Ebene bis zur ersten Reflexion
- Fig. 2b: den Verlauf eines Strahlenbündels in der X-Y-Ebene bis zur ersten Reflexion
- Fig. 3a: den Verlauf eines Strahlenbündels in einem Umfangsspiegel 5 gebildet von einem kreiszylinderförmigen Spiegel bei einem Werkstück mit einem kleineren Werkstückradius
- Fig. 3b: den Verlauf eines Strahlenbündels in einem Umfangsspiegel 5 gebildet von einem kreiszylinderförmigen Spiegel bei einem Werkstück mit einem größeren Werkstückradius
- Fig. 4: einen Umfangsspiegel 5 gebildet von einem quaderförmigen Spiegel mit einem quadratischen Querschnitt
- Fig. 5: einen Umfangsspiegel 5 gebildet von einem prismatischen Spiegel mit einem 5-Eck als Querschnitt und zusätzlichen Spiegelelementen 14
- Fig. 6: einen Umfangsspiegel 5 gebildet von einem prismatischen Spiegel mit einem 8-Eck als Querschnitt und zusätzlichen Spiegelelementen 14
- Fig. 7: einen Umfangsspiegel 5 mit einem Polygonspiegel als zusätzliches Spiegelelement 14
- Fig. 8: einen Umfangsspiegel 5 mit einem Winkelspiegel als zusätzliches Spiegelelement 14
- Fig. 9: eine Vorrichtung mit einem zusätzlichen optischen System und zwei Strahleintrittsöffnungen
- Fig. 10: einen Umfangsspiegel 5 gebildet von einem kreiskegelstumpfförmigen oder pyramidenstumpfförmigen Spiegel mit runder oder n-eckiger Querschnittsfläche
- Fig. 11: eine Teilumfangsbearbeitung eines Werkstückes 8
- Fig. 12: ein Model für den Verlauf von Strahlen des Strahlenbündels 3 innerhalb eines Umfangsspiegels 5
- Fig. 13: ein Diagramm für die Energieverteilung über den Umfang eines Werkstückes 8

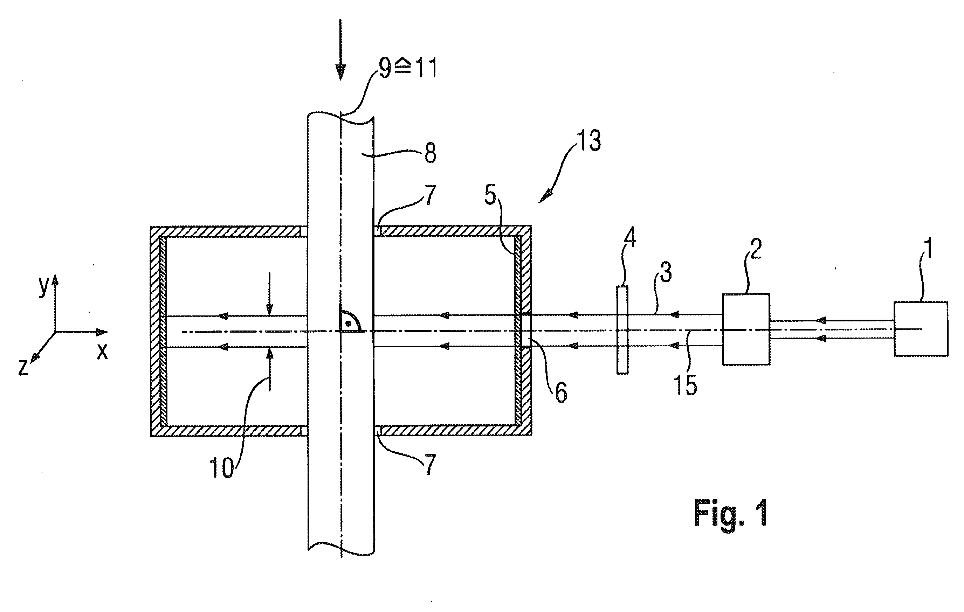

Eine erfindungsgemäße Vorrichtung, prinzipiell dargestellt in Fig. 1, umfasst eine Bearbeitungskammer 13 und ein optisches System mit einer optischen Achse 15, welches durch einen Laser 1 und grundsätzlich eine erste Strahlformungsoptik 2 zur Durchmesserveränderung und Parallelisierung eines vom Laser 1 emittierten Strahlenbündels 3 sowie eine zweite Strahlformungsoptik 4 zur Fokussierung des Strahlenbündels 3 in einer Achsrichtung gebildet ist.

Die Bearbeitungskammer 13 weist Durchführöffnungen 7 auf, durch die hindurch ein zu bearbeitendes Werkstück 8 in Richtung seiner Werkstückachse 11 (im Stand der Technik als Hauptachse bezeichnet) geführt wird.

Die Bearbeitungskammer 13 umschließt einen Umfangsspiegel 5 mit einer Umfangsspiegelsystemachse 9. Die Werkstückachse 11 und die Umfangsspiegelsystemachse 9 sind zueinander parallel ausgerichtet oder fallen bevorzugt zusammen. Die Bearbeitungskammer 13 und der Umfangsspiegel 5 weisen je eine identische Strahleintrittsöffnung 6 auf, zu der das optische System so angeordnet ist, dass das Strahlenbündel 3 mit der optischen Achse 15 senkrecht zur Umfangsspiegelsystemachse 9 in den Umfangsspiegel 5 eingekoppelt wird und nach mehrfacher Reflexion am Umfangsspiegel 5 auf das Werkstück 8 auftrifft.

In Abhängigkeit von der Geometrie des Werkstückes 8 und dem Bearbeitungsziel weist die Vorrichtung vorteilhaft wenigstens eine Bewegungseinrichtung auf, die geeignet ist, eine Relativbewegung zwischen dem optischen System, dem Umfangsspiegel 5 und dem Werkstück 8 zu erzeugen.

Eine solche Relativbewegung ist dann notwendig, wenn das Werkstück 8 nicht nur getrennt werden soll oder in einer Länge bearbeitet werden soll, die der Breite des Arbeitsbereiches 10 entspricht, sondern über größere Längen oder dessen Gesamtlänge partiell oder vollständig am Umfang bearbeitet werden soll.

Bei strangförmigen Werkstücken wird vorteilhaft das Werkstück 8 entlang seiner Werkstückachse 11 bewegt. Eine Rotation um seine eigene Werkstückachse 11 kann zur Beeinflussung des Energieeintrages über den Umfang dienen.

Bei Werkstücken 8, die nacheinander einzeln zur Bearbeitung in den Umfangsspiegel 5 eingeführt werden, kann es von Vorteil sein, das Werkzeug, d. h. das Strahlenbündel 3 zu bewegen, was insbesondere durch die Bewegung des gesamten optischen Systems mit oder auch ohne den Umfangsspiegel 5 in Richtung der Werkstückachse 11 von Vorteil ist. Wird der Umfangsspiegel 5 nicht mit bewegt, muss die Strahleintrittsöffnung 6 als ein entsprechend langer Schlitz ausgebildet sein, damit das Strahlenbündel 3 über den gesamten vorgesehenen Bewegungsbereich eingekoppelt werden kann. Nach Fertigstellung eines Werkstückes 8 kann das optische System in seine Ausgangslage zurückbewegt werden oder aber mit der Rückführbewegung wird bereits das nachfolgende Werkstück 8 bearbeitet.

Z. B. zur bloßen Trennung eines strangförmigen Werkstückes 8 ist es von Vorteil, wenn wenigstens eine Bewegungsvorrichtung vorhanden ist, die geeignet ist, das optische System, den Umfangsspiegel 5 und das Werkstück 8 während der Bearbeitung gemeinsam in Richtung der Werkstückachse 11 zu bewegen. Damit erfolgt keine Relativbewegung, womit auch bei einer längeren Dauer der Strahleinwirkung und hohen Vorschubgeschwindigkeit des Werkstückes 8 das Werkstück über eine Länge gleich der Breite des Arbeitsbereiches 10 bearbeitet wird. Nach jedem Bearbeitungsvorgang werden das optische System und, falls mitbewegt, auch der Umfangsspiegel 5 in ihre Ausgangslage zurückbewegt.

Anstelle einer Bewegungseinheit für das optische System, können auch innerhalb des optischen Systems bewegte, optisch umlenkende Elemente vorgesehen sein, die die optische Achse 15 des in den Umfangsspiegel 5 einfallenden Strahlenbündels 3 einer gegebenen Bewegung des Werkstückes 8 zeitweise nachführen.

Zur Durchführung des Verfahrens wird ein Umfangsspiegel 5 mit einer Umfangsspiegelsystemachse 9 bereitgestellt, in den ein Werkstück 8 mit einer Werkstückachse 11 so eingeführt wird, dass die Umfangsspiegelsystemachse 9 und die Werkstückachse 11 in einer Richtung verlaufen.

Über eine vorgegebene Bearbeitungszeit wird ein Strahlenbündel 3 entlang einer optischen Achse 15 senkrecht zur Umfangsspiegelsystemachse 9 verlaufend in den Umfangsspiegel 5 eingekoppelt und an dessen Spiegelfläche mehrfach reflektiert, bis es auf das Werkstück 8 auftrifft.

Als Laser 1 kommen alle in der Materialbearbeitung anwendbaren Lasertypen, wie CO₂-Laser, NdYAG-Laser, in stab- oder scheibenförmiger Anordnung, Faserlaser oder Hochleistungsdiodenlaser, sowohl als kontinuierlich emittierende Laser, gepulste Laser oder Oszillator-Verstärkeranordnungen in Frage. Die Auswahl und Einstellung der Laser- und Prozessparameter erfolgt in Abhängigkeit von den Materialeigenschaften des Werkstückes 8 und vom Bearbeitungsziel. Für das Verständnis der Erfindung soll die vom Laser 1 emittierte Strahlung als ein Strahlenbündel 3 verstanden werden, welches über die Dauer der Bearbeitungszeit vom Laser 1 ausgesendet wird.

Je nach der Abstrahlcharakteristik des Lasers 1 ist die erste Strahlformungsoptik 2 z. B. ein Kollimator, ein Teleskop oder DEO (diffraktives optisches Element), um ein über den Strahlenweg quasi achsparalleles Strahlenbündel 3 zu formen, d. h. ein Strahlenbündel 3 mit minimaler Divergenz bei einer für das Bearbeitungsziel ausreichenden hohen Energiedichte, bzw. um das Strahlenbündel 3 so in seinem Durchmesser zu verändern, insbesondere aufzuweiten, dass eine gewünschte Breite für einen Arbeitsbereich 10, der durch den Durchmesser des Strahlenbündels 3 in der X-Y-Ebene bestimmt ist, erreicht wird. Sofern der ausgewählte Laser 1 bereits mit einem hinreichend kleinen Divergenzwinkel emittiert, d. h. die Abweichung von einer Achsparallelität kann toleriert werden, ist diese erste Strahlformungsoptik 2 nicht zwingend erforderlich.

Die zweite Strahlformungsoptik 4 ist bevorzugt eine Zylinderlinse, welche das Strahlenbündel 3 in senkrechter Richtung zur Zylinderachse, die in Richtung der Umfangsspiegelsystemachse 9 verläuft, fokussiert.

Bezogen auf ein kartesisches Koordinatensystem, durch dessen Koordinatenursprung die optische Achse 15 verläuft, wird das Strahlenbündel 3 in der X-Y-Ebene fokussiert, sodass in der Y-Z-Ebene eine Fokuslinie entsteht.

In Richtung der Zylinderachse, d. h. in der Y-Z-Ebene, bleibt das Strahlenbündel 3 unbeeinflusst und weist über den gesamten Strahlenweg eine quasi konstante Breite auf, die für die Breite des bestrahlten Bereiches (Arbeitsbereich 10) bestimmend ist. Im Falle der Einkopplung eines parallelen Strahlenbündels 3 in den Umfangsspiegel 5 entfällt diese zweite Strahlformungsoptik 4.

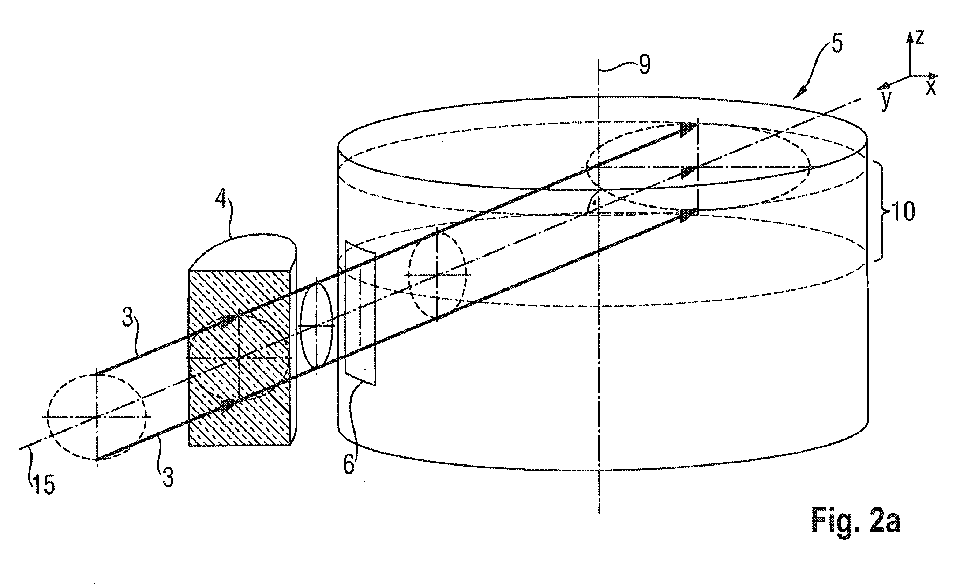

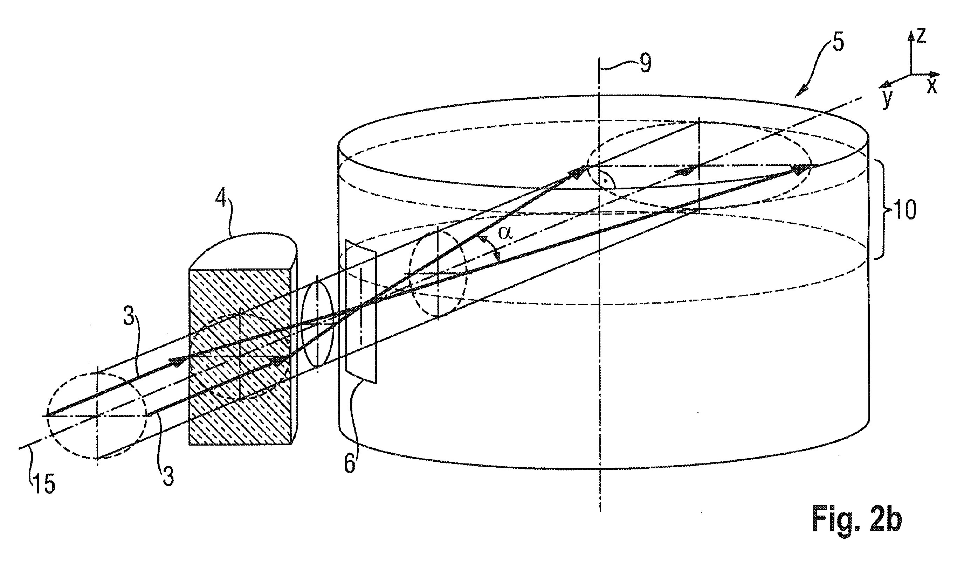

In den Fig. 2a und 2b ist der Verlauf eines Strahlenbündels 3 in den beiden genannten, ausgezeichneten Ebenen durch die zweite Strahlformungsoptik 4, gebildet durch eine Zylinderlinse, bis hin zur ersten Reflexion im Umfangsspiegel 5 dargestellt.

Vorteilhaft ist die optische Anordnung, gebildet durch den Laser 1 und die beiden Strahlformungsoptiken 2, 4, so dimensioniert und zu der Strahleintrittsöffnung 6 angeordnet, dass die sich im Strahlenbündel 3 ausbildende Fokuslinie in der Strahleintrittsöffnung 6 liegt. Damit kann diese sehr schmal ausgeführt werden, was die Gefahr eines Wiederaustretens von Anteilen eines einmal in den Umfangsspiegel 5 eingekoppelten Strahlenbündels 3 auf ein Minimum reduziert. Die Strahleintrittsöffnung 6 kann eine wahre Öffnung in der Bearbeitungskammer 13 und dem Umfangsspiegel 5 sein, oder aber ein Bereich, in dem die Bearbeitungskammer 13 und der Umfangsspiegel 5 für das Strahlenbündel 3 des Lasers 1 transparent sind. In der praktisch günstigsten Ausführung wird die Strahleintrittsöffnung 6 in der Bearbeitungskammer 13 als ein Fenster ausgebildet und im Umfangsspiegel 5 ist die Strahleintrittsöffnung 6 eine wahre Öffnung.

Der Umfangsspiegel 5 wird durch die innere Mantelfläche eines zylinderförmigen, quaderförmigen oder prismatischen Hohlkörpers bzw. in speziellen Ausführungen eines Hohlkegelstumpfes oder Hohlpyramidenstumpfes gebildet. Dabei kann die innere Mantelfläche eine Spiegelfläche bilden, die sich aus einer Vielzahl von Teilflächen zusammensetzt, deren Anzahl, Geometrie und Anordnung zueinander für unterschiedliche, mögliche Querschnitte des Umfangsspiegels 5 bestimmend ist, wie an den nachfolgenden Ausführungsbeispielen näher erläutert wird.

Für die Funktion des Umfangsspiegels 5 ist allein die Spiegelfläche bestimmend, d. h. wenn der Umfangsspiegel 5, wie in Fig. 1 gezeigt, von einer Bearbeitungskammer 13 umgeben ist, dient diese lediglich der Aufnahme des Umfangsspiegels 5 und der Einhausung des eingekoppelten Strahlenbündels 3. Die Einhausung stellt demnach eine Sicherheitsmaßnahme dar und ist für ein Funktionieren der Vorrichtung nicht zwingend erforderlich.

Die unterschiedlichen geeigneten Querschnitte des Umfangsspiegels 5 sind in Abhängigkeit vom Querschnitt des Werkstückes 8 und dem Bearbeitungsziel vorteilhaft.

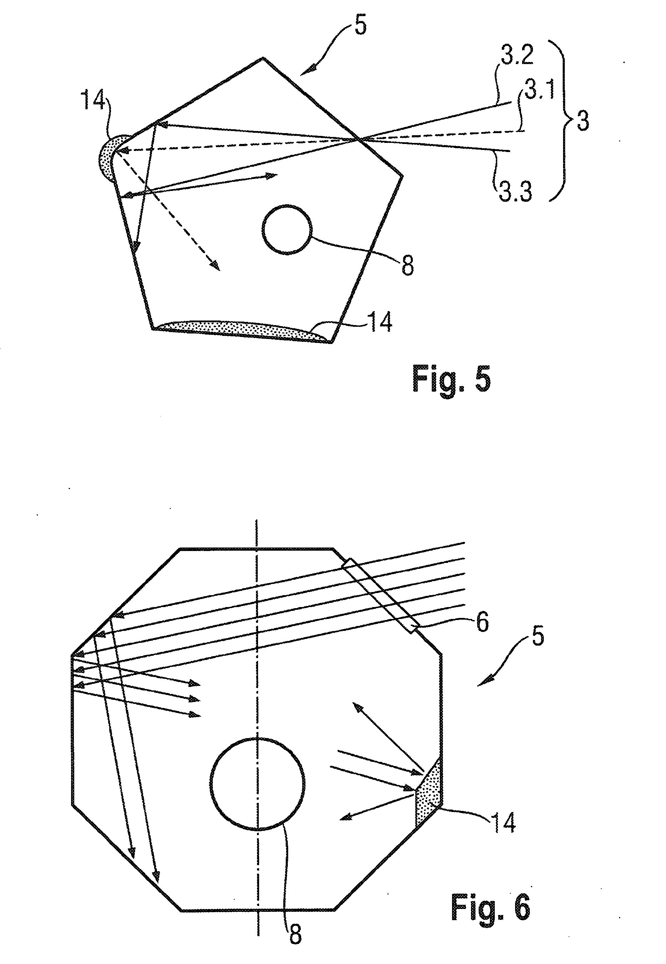

Als Querschnitte für den Umfangsspiegel 5 kommen insbesondere ein Kreis, ein Oval und durch Teilflächen gebildete Vielecke mit aus Herstellungsgründen vorzugsweise gleichen Kantenlängen und gleichen Innenwinkeln in Frage. Zusätzliche Spiegelelemente 14, wie in den Figuren 5 und 6 gezeigt, die im Innenraum des Umfangsspiegels 5 frei oder an diesem angeordnet sind, können die gezielte Führung des Strahlenbündels 3 unterstützen.

Es ist das Ziel, das zeitlich begrenzt eingekoppelte Strahlenbündel 3 so innerhalb des Umfangsspiegels 5 durch Reflexion zu führen, dass es letztendlich auf den Umfang des Werkstückes 8 trifft und seine Strahlungsenergie am Auftreffort absorbiert wird. Mit dem Auftreffen des Strahlenbündels 3 auf das Werkstück 8 hat das Strahlenbündel 3, beginnend vom Laser 1, seinen Strahlenweg zurückgelegt. Am Ort der Absorption erfolgt eine Materialbeeinflussung. Im Falle eines Materialabtrages wird der Weg für das Strahlenbündel 3 freigegeben, sodass nachfolgende Strahlungsenergie am Werkstück 8 vorbeigeführt wird und nach weiterer Reflexion des Strahlenbündels 3 am Umfangsspiegel 5 an anderer Stelle am Umfang des Werkstückes 8 auftrifft.

Idealerweise sind der Umfangsspiegel 5 und eventuelle zusätzliche Spiegelelemente 14 auf die Umfangsgeometrie und Dimension des Werkstückes 8 so abgestimmt, dass die Umfangsfläche oder eine Umfangsteilfläche des Werkstückes 8, sofern nur diese bearbeitet werden soll, innerhalb des Arbeitsbereiches 10 gleichmäßig mit Strahlungsenergie beaufschlagt wird.

Eine erfindungsgemäße Vorrichtung ist insbesondere geeignet zur Umfangsbearbeitung von zylinderförmigen, drahtförmigen, bandförmigen oder rohrförmigen Werkstücken 8, insbesondere langen oder sogenannten endlosen Strangmaterialien. Die endlosen Strangmaterialien werden durch den Umfangsspiegel 5 in Richtung dessen Umfangsspiegelsystemachse 9 geführt, um so über ihre gesamte Länge oder auch nur abschnittsweise über ihre Länge bearbeitet zu werden. Dadurch, dass der Umfangsspiegel 5 in Richtung der Umfangsspiegelsystemachse 9 beidseitig frei zugänglich ist, ist eine Zuführung, Durchführung und Abführung des Werkstückes 8 einfach möglich, d. h. hierfür notwendige Handlingseinrichtungen haben einen freien Zugang. Unter langen Strangmaterialien sollen auch Einzelteile wie Schrauben, Bolzen und Rohrstücke verstanden werden.

Vorteilhaft ist auch, dass durch einen Austausch nur des Umfangsspiegels 5 bzw. der Bearbeitungskammer 13 mit dem Umgangsspiegel 5 die Vorrichtung an Werkstücke 8 anderer Querschnittsgeometrie oder anderer Dimensionierung bzw. an ein anderes Bearbeitungsziel angepasst werden kann.

Dass die Bearbeitungskammer 13 mit einer Absaugeinrichtung verbunden sein kann, um das durch den Laserstrahl abgelöste Material abzuführen, ist dem Fachmann bekannt. Auch kann eine Kühlung für den Umfangsspiegel 5 vorgesehen sein.

Grundsätzlich wird die Werkstückachse 11 in der Umfangsspiegelsystemachse 9 angeordnet, sie kann in speziellen Aufführungsbeispielen allerdings hierzu auch parallel angeordnet werden.

In jedem Fall sind die Werkstückachse 11 und die Umfangsspiegelsystemachse 9 in gleicher Richtung ausgerichtet.

Die Werkstücke 8 können anstelle von Festkörpersträngen insbesondere auch viskose Fluidstränge sein, wofür die berührungslose Bearbeitung in erfindungsgemäßer Weise von besonderem Vorteil ist.

Unter Bearbeitung bzw. dem Bearbeitungsziel soll hier jede denkbare Materialbeeinflussung mittels Laserstrahlung verstanden werden, wie z. B. eine Erwärmung, Verdampfung und Sublimation, Abtragung, Bestrahlung zur Oberflächenveränderung, Beschichtung sowie Einengung oder Trennung des Materialstranges. Für die Auswahl eines geeigneten Umfangsspiegels 5 mit seiner Geometrie und seiner Dimensionierung ist insbesondere zu unterscheiden, ob das Werkstück 8 vollständig durchtrennt werden soll, wozu der Arbeitsbereich 10 möglichst schmal zu gestalten ist, oder ob über einen Umfangsbereich ein flächiger Abtrag bzw. eine flächige thermische Beeinflussung des Werkstückes 8 erfolgen soll, wozu der Arbeitsbereich 10 eine vorgegebene Breite haben bzw. möglichst breit sein soll.

Dabei kann über einen Arbeitsbereich 10 der gesamte Umfang oder auch nur ein Teilbereich des Umfanges des Werkstückes 8 bearbeitet werden, z. B. durch Erwärmung nur der Unterseite eines Bandstahls.

Die Werkstücke 8 können aus jeglichen mit Laser bearbeitbaren Materialen bestehen, wie z. B. Glas, Polymere und Metalle sowie deren Schmelzen.

Das Werkstück 8, insbesondere ein Materialstrang, kann während der Bearbeitung zum Umfangsspiegel 5 in Richtung seiner Werkstückachse 11 relativ bewegt werden und/oder um seine Werkstückachse 11 gedreht werden oder aber auch in Ruhe verharren. Damit das Werkstück 8 mit konstanter Geschwindigkeit bewegt werden kann, ist es insbesondere zur Erhöhung des örtlichen Energieeintrages von Vorteil, wenn eine Bewegungseinrichtung vorhanden ist, mit der das optische System während der Bearbeitung dem Werkstück 8 nachgeführt wird.

Ob und welcher Art eine Relativbewegung und mit welcher Geschwindigkeit sie gegebenenfalls erfolgt, hängt vom Bearbeitungsziel ab.

Anstelle nur eines optischen Systems kann die Vorrichtung auch zwei oder mehr optische Systeme aufweisen, die jeweils mit Lasern 1 ausgestattet sind, die Strahlenbündel 3 unterschiedlicher Wellenlänge emittieren.

Eine zeitgleiche oder zeitlich aufeinanderfolgende Bearbeitung mit Strahlenbündeln 3 unterschiedlicher Wellenlänge kann z. B. von Vorteil sein, wenn Werkstücke 8 aus einem semitransparenten Werkstoff bearbeitet werden, die unterschiedliche Wellenlängen in unterschiedlichen Bearbeitungstiefen unterschiedlich absorbieren. Den z. B. zwei optischen Systemen kann jeweils eine Strahleintrittsöffnung 6 zugeordnet sein, womit eine Überlagerung der Arbeitsbereiche 10 möglich ist, oder aber die Strahlenbündel 3 werden, in der Einkoppelhöhe zueinander versetzt, durch eine gemeinsame Strahleintrittsöffnung 6 eingekoppelt, die entsprechend in Richtung der Umfangsspiegelsystemachse 9 ausgedehnt ist, womit eine zeitliche aufeinanderfolgende Bearbeitung erfolgen kann.

Nachfolgend sollen einige Ausführungsbeispiele aufgezeigt werden, die sich insbesondere durch unterschiedliche Ausführungen des Umfangsspiegels 5 unterscheiden.

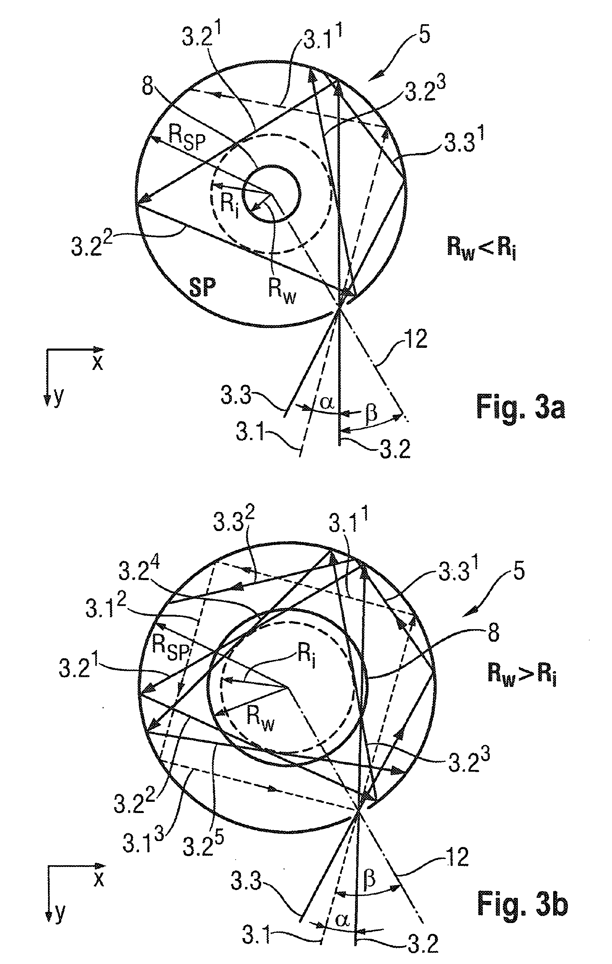

In einem ersten Ausführungsbeispiel, erläutert an den Fig. 3a und 3b, wird der Umfangsspiegel 5 von einem kreiszylinderförmigen Spiegel gebildet, der durch dessen Spiegelfläche als Kreislinie mit einem Krümmungsradius R_{SP} dargestellt ist. Die Zeichenebene stellt die X-Y-Ebene dar, in der sich das Strahlenbündel 3 als divergentes Strahlenbündel durch Mehrfachreflexionen an der mit dem Radius R_{SP} gekrümmten Spiegelfläche ausbreitet.

Von dem in den Umfangsspiegel 5 einfallenden Strahlenbündel 3 sind durch eine dünne Strichlinie ein Achsstrahl 3.1, durch eine dicke Volllinie ein erster Randstrahl 3.2 und durch eine dicke Strichlinie der zweite Randstrahl 3.3 dargestellt.

Alle Strahlen des Strahlenbündels 3 schneiden sich in der Fokuslinie, die in der Strahleintrittsöffnung 6 liegt, wobei die Randstrahlen 3.2, 3.3 mit dem Achsstrahl 3.1 den halben Öffnungswinkel α miteinander einschließen, der für die Divergenz des Strahlenbündels 3 bestimmend ist und der Achsstrahl 3.1 mit einer durch die Fokuslinie verlaufenden Flächennormalen 12 der Spiegelfläche einen Neigungswinkel β einschließt, der für die Einfallrichtung des Strahlenbündels 3 in den Umfangsspiegel 5 bestimmend ist.

Wie bei einem Vergleich der Fig. 3a und 3b gut erkennbar ist, verläuft der mehrfach reflektierte Randstrahl 3.2 bei gleichen Parametern α, β und R_{SP} stets tangential zu einem zentralen Gebiet mit dem Grenzradius Rᵢ. Alle anderen Strahlen des Strahlenbündels 3, hier sind nur der erste Randstrahl 3.2 und der zweite Randstrahl 3.3 dargestellt, verlaufen in einem größeren Abstand zu diesem zentralen Gebiet. Während, wie in Fig. 3a gezeigt, ein Werkstück 8 mit einem Radius R_{W} kleiner Rᵢ nicht durch ein Strahlenbündel 3 getroffen wird und damit keine Materialbearbeitung stattfindet, kann ein Werkstück 8 mit einem Radius R_{W}, der größer ist als Rᵢ, gezielt über eine bestimmte Tiefe vom Werkstückumfang ausgehend über seinen Umfang bearbeitet werden.

Das erste Ausführungsbeispiel für einen Umfangsspiegel 5 ist vorteilhaft geeignet z. B. zum Entfernen oder Härten von Oberflächenschichten, insbesondere rotationssymmetrischer Materialstränge, wo das Werkstück 8 nur bis in eine vorgegebene Tiefe beeinflusst werden soll.

Über die Auswahl der Parameter α, β und der Breite des Strahlenbündels 3 in Y-Z-Ebene wird der Arbeitsbereich 10 in seiner Breite über den Umfang des Werkstückes 8 und seiner Tiefe, bis in welche das Werkstück 8 von seinem Umfang her ausgehend vom Auftreffen des Strahlenbündels 3 mit Strahlungsenergie beaufschlagt wird, vorgegeben.

Die Tiefe ergibt sich hierbei aus der Differenz des Werkstückradius R_{W} und dem sich durch die ausgewählten Strahlparameter einstellenden Grenzradius Rᵢ, womit z. B. eine Nut vorgegebener Tiefe und Breite am Werkstück 8 hergestellt werden kann.

Wenn der halbe Öffnungswinkel α und der Neigungswinkel β so gesteuert werden, dass der Grenzradius Rᵢ zum Beginn der Bearbeitung gleich dem Werkstückradius R_{W} ist und nach einem vorgegebenen Zeitregime den Wert Null erreicht, wird das Werkstück 8 entsprechend gezielt und reproduzierbar durch Strahlungsenergie beaufschlagt. Ist das Material des Werkstückes 8 für die Laserwellenlänge des Strahlungsbündels 3 semitransparent, so kann die Strahlungsenergie in das Werkstück 8 eindringen.

Insbesondere kommt es bei viskosen Materialien mit starker Abhängigkeit der Viskosität von der Temperatur, wie z.B. bei einer Glasschmelze, zum gleichzeitigen Erwärmen, Verringern der Viskosität, Verdampfen, Einengung durch Wirkung der Oberflächenspannung und Abtrennen bzw. Tropfenbildung durch Wirkung der Schwerkraft oder anderer äußerer Kräfte.

Das Werkstück 8 kann während der Bearbeitung in relativer Ruhe zum Umfangsspiegel 5 und damit zu dem sich ausbreitenden Strahlenbündel 3 sein oder aber entlang seiner Werkstückachse 11 bewegt werden, womit in Korrelation mit der axialen Geschwindigkeit eine flächenhafte Bestrahlung über eine Breite größer dem Arbeitsbereich 10 erfolgt.

Während der Bearbeitung bleibt der gesamte Arbeitsbereich 10 strahlungserfüllt und das Werkstück 8 wird gleichmäßig quasi simultan über seinen Umfang bestrahlt bzw. bearbeitet.

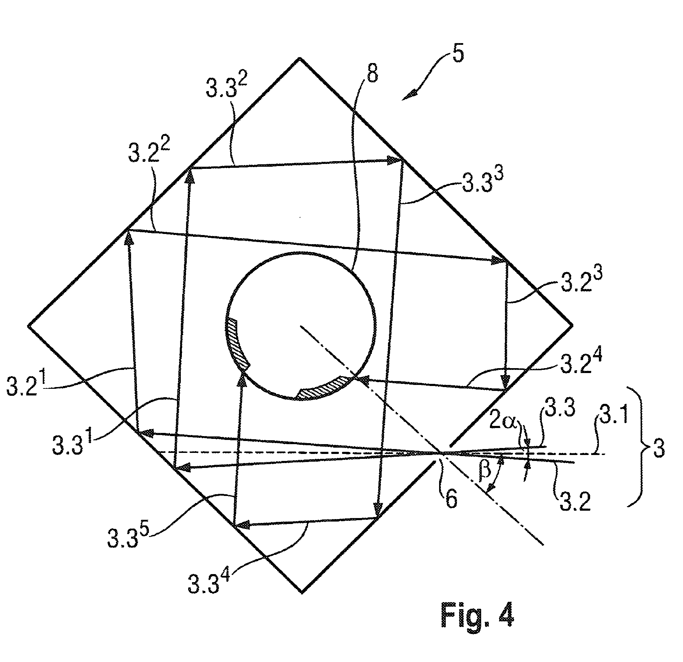

In einem zweiten Ausführungsbeispiel, erläutert anhand von Fig. 4, wird der Umfangsspiegel 5 von einem Spiegel mit quadratischem Querschnitt gebildet, d. h. die Spiegelfläche besteht aus vier planen Teilflächen, die rechtwinklige Ecken miteinander bilden.

Dargestellt sind ausgehend von der Strahleintrittsöffnung 6, in der die Fokuslinie eines Strahlenbündels 3 liegt, ein Achsstrahl 3.1 und die Randstrahlen 3.2 und 3.3 des Strahlenbündels 3, die abschnittsweise entsprechend der vorangegangenen Reflexionen mit einem Exponenten versehen sind.

So lässt sich die Strahlführung innerhalb des Umfangsspiegels 5 gut verfolgen und zeigt z. B. ein erstes Auftreffen des Strahlenbündels 3 durch den Randstrahl 3.2⁴ auf das Werkstück 8 nach der vierten Reflexion.

Im Vergleich mit dem ersten Ausführungsbeispiel für einen Umfangsspiegel 5, ist es bei dieser Lösung von Vorteil, wenn das Werkstück 8 während seiner Bearbeitung um seine Werkstückachse 11 gedreht wird, wodurch die Materialbeeinflussung über den Umfang homogenisiert wird.

Günstig auf die Homogenisierung wirkt sich auch die Anpassung der Anzahl der Teilflächen aus und eine Reflexion in den Ecken zwischen den Teilflächen, die eine Strahlteilung bewirkt.

In Fig. 5 ist ein drittes Ausführungsbeispiel für einen Umfangsspiegel 5 gezeigt, der von einem Spiegel mit einem 5-eckigen Querschnitt gebildet ist.

Ein Strahlenbündel 3, welches wie in den vorangehenden Ausführungsbeispielen in der Strahleintrittsöffnung 6 eine Fokuslinie bildet, verläuft in der Zeichenebene, welche die X-Y-Ebene darstellt, divergent. Das Strahlenbündel 3, dargestellt durch die drei Strahlen 3.1, 3.2 und 3.3, wird so in den Umfangsspiegel 5 eingekoppelt, dass es auf eine zwischen zwei benachbarten Teilflächen konkav ausgebildete Ecke auftrifft, wodurch das Strahlenbündel 3 stark aufgefächert wird, und die Strahlen dann aus unterschiedlichen Richtungen kommend nach weiteren Reflexionen auf das Werkstück 8 auftreffen.

Ebenso wie die Ecken können die Teilflächen, abweichend von Planflächen, als sphärische oder asphärische Flächen ausgebildet sein.

Die modifizierte Oberflächenform kann entweder durch eine entsprechende Oberflächenform der Spiegelfläche an den Teilflächen bzw. den Ecken erfolgen oder aber durch fest am Umfangsspiegel 5 angebrachte zusätzliche Spiegelelemente 14, wie in den Fig. 5 und 6 dargestellt.

Wie in Fig. 5 gezeigt, kann das Werkstück 8 mit seiner Werkstückachse 11 auch parallel zur Umfangsspiegelsystemachse 9 angeordnet sein.

Das in Fig. 6 gezeigte vierte Ausführungsbeispiel für ein Umfangsspiegel 5 wird von einem Spiegel mit einem 8-eckigen Querschnitt gebildet.

Hier trifft das einfallende Strahlenbündel 3, dargestellt durch fünf Strahlen, zuerst auf eine Ecke, die strahlteilend wirkt. Ein zusätzliches Spiegelelement 14, was ebenfalls strahlteilend wirkt, aber auch die entstehenden Teilstrahlenbündel in ihrer Umlaufrichtung vertauscht, ist dargestellt.

Anstelle eines divergenten Strahlenbündels 3 wird im Unterschied zu allen vorangehend beschriebenen Ausführungsbeispielen ein auch in der X-Y-Ebene quasi achsparalleles Strahlenbündel 3 in den Umfangsspiegel 5 eingekoppelt.

Bei den vorangehend beschriebenen Ausführungsbeispielen wird das Strahlenbündel 3 so in den Umfangsspiegel 5 eingekoppelt, dass die optische Achse 15 die Umfangsspiegelsystemachse 9 nicht schneidet, indem sie windschief zur Umfangsspiegelsystemachse 9 verläuft.

Das Strahlenbündel 3 kann jedoch auch, gemäß den beiden folgenden Ausführungsbeispielen, so eingekoppelt und umgelenkt werden, dass die optische Achse 15 mit der Umfangsspiegelsystemachse 9 nicht zusammentrifft, indem ein zusätzliches Spiegelelement 14 im Umfangsspiegel 5 so angeordnet ist, dass eine erste Reflexion hieran erfolgt.

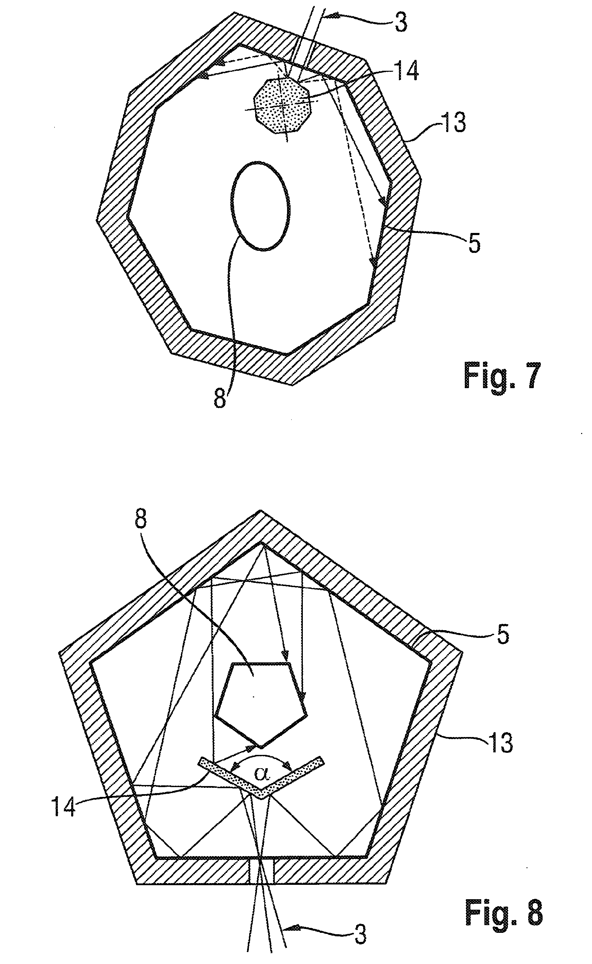

Auch bei dem in Fig. 7 gezeigten fünften Ausführungsbeispiel soll ein ebenfalls in X-Y-Ebene quasi achsparalleles Strahlenbündel 3 in den Umfangsspiegel 5 eingekoppelt werden, welcher hier ebenfalls einen achteckigen Querschnitt aufweist, allerdings mit unterschiedlichen Kantenlängen der Teilflächen.

Ein zusätzliches Spiegelelement 14, hier ein rotierender Polygonspiegel, sorgt dafür, dass das Strahlenbündel 3, hier dargestellt durch zwei Randstrahlen, in zwei Teilstrahlenbündel zerlegt wird und diese in einem sich ständig ändernden Ablenkwinkel auf unterschiedliche erste Teilflächen des Umfangsspiegels 5 auftreffen. Dadurch hat das Strahlenbündel 3 im Unterschied zu allen vorherigen Ausführungsbeispielen einen sich zeitlich ständig ändernden Verlauf, bis es auf das Werkstück 8, das hier beispielhaft einen elliptischen Querschnitt aufweist, an sich ständig ändernder Stelle auftrifft.

Fig. 8 zeigt ein sechstes Ausführungsbeispiel, bei dem ebenfalls innerhalb des Umfangsspiegels 5 ein zusätzliches Spiegelelement 14, hier ein Winkelspiegel, angeordnet ist.

Auch hier erfolgt eine erste Strahlteilung des Strahlenbündels 3 in Teilstrahlenbündel, bevor diese erstmalig auf eine Teilfläche des Umfangsspiegels 5 auftreffen, d. h. vor einer ersten Reflexion am Umfangsspiegel 5. Die Teilstrahlenbündel breiten sich hier spiegelsymmetrisch, in entgegengesetzter Richtung um das Werkstück 8 aus und treffen über mehrere Reflexionen auf das Werkstück 8. Das Werkstück 8 weist hier beispielhaft ein 5-Eck mit gleichen Kantenlängen als Querschnitt auf.

Alle vorgenannten Ausführungsbeispiele haben gemeinsam, dass ein Werkstück 8 durch die auftreffenden Strahlenbündel 3 vollumfänglich mit der Strahlungsenergie von einer Strahlungsquelle kommend, insbesondere einem Laser 1, über eine vorbestimmte Zeitdauer beaufschlagt wird.

Eine erfindungsgemäße Vorrichtung ist jedoch nicht auf eine einzige Strahlungsquelle beschränkt und auch nicht auf einen Umfangsspiegel 5 mit senkrecht auf der Umfangsspiegelsystemachse 9 stehenden Flächennormalen 12, was an einem siebenten und achten Ausführungsbeispiel gezeigt werden soll.

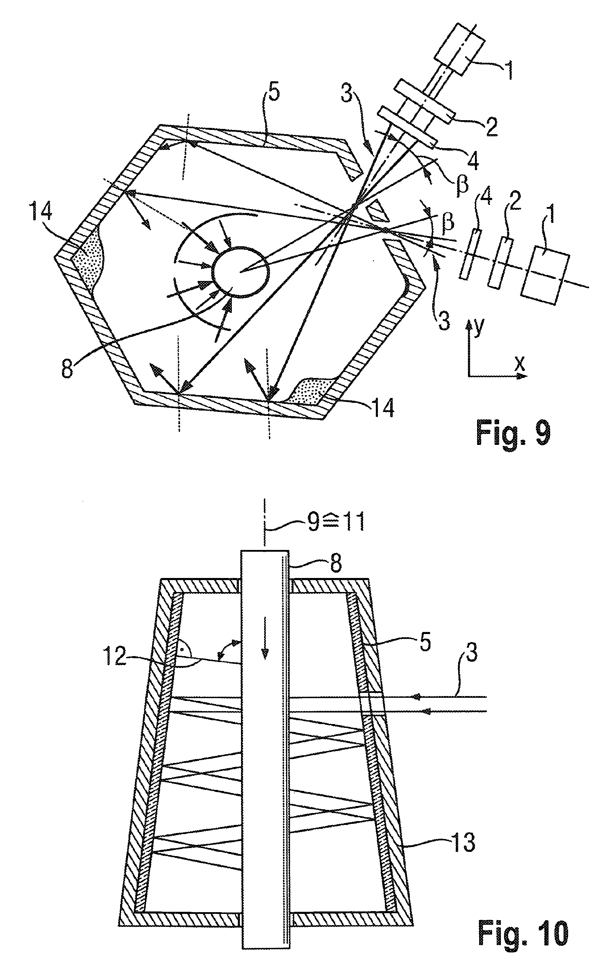

Ein siebentes Ausführungsbeispiel, dargestellt in Fig. 9, umfasst zwei Laser 1 mit jeweils vorgeordneten Strahlformungsoptiken 2, 4 und jeweils einer Strahleintrittsöffnung 6. Damit werden, bevorzugt zeitgleich, zwei Strahlenbündel 3 in den Umfangsspiegel 5 eingekoppelt. Sie können eine gleiche Strahlgeometrie aufweisen und unter einem gleichen Neigungswinkel β in den Umfangsspiegel 5 eingekoppelt werden, womit der Eintrag der Strahlungsenergie in das Werkstück 8 verdoppelt wird.

Die Strahlformungsoptiken 2, 4 können aber auch unterschiedlich ausgelegt werden, so dass sich z. B. die Breite der beiden Strahlenbündel 3 über die Y-Z-Ebene unterscheidet, um z. B. das Werkstück 8 über einen vorgegebenen Arbeitsbereich 10 durch Bestrahlung zu härten und gleichzeitig innerhalb eines wesentlich kleineren Arbeitsbereiches 10 zu trennen.

Die beiden Strahlenbündel 3 können auch in unterschiedlicher Höhe in den Umfangsspiegel 5 eingekoppelt werden, um z. B. beim Passieren eines oberen Arbeitsbereiches 10 eine erste Bearbeitung und beim Passieren eines unteren Arbeitsbereiches 10 eine zweite Bearbeitung am Umfang des Werkstückes 8 vorzunehmen.

In dem dargestellten Ausführungsbeispiel sind auch noch einmal zusätzliche, am Umfangsspiegel 5 angebrachte Spiegelelemente 14 gezeigt.

Eines der beiden zusätzlichen Spiegelelemente 14 weist eine konvex gekrümmte Spiegelfläche auf, welche die Divergenz des auftreffenden Strahlenbündels 3 erhöht, während das andere zusätzliche Spiegelelement 14 aus zwei ebenen Teilflächen besteht, die miteinander einen stumpfen Winkel einschließen, sodass bei Beibehaltung des Divergenzwinkels das Strahlenbündel 3 in zwei Teilstrahlbündel aufgeteilt wird.

Die zusätzlichen Spiegelelemente 14 grenzen mit konkav gestalteten Übergängen an die Spiegelfläche des Umfangsspiegels 5 an, was sich positiv auf die Reflexion auswirkt.

Ein achtes Ausführungsbeispiel, dargestellt in Fig. 10, unterscheidet sich gegenüber den vorhergenannten Ausführungsbeispielen, bei denen die Flächennormalen 12 des Umfangsspiegels 5 in jedem Punkt der Spiegelfläche senkrecht auf der Umfangsspiegelsystemachse 9 stehen, dadurch, dass die Flächennormalen 12 einen gleichen Winkel kleiner 90° mit der Umfangsspiegelsystemachse 9 einschließen. Der Umfangsspiegel 5 kann z. B. ein Pyramidenstumpf oder ein Kegelstumpf sein.

In Abhängigkeit vom Winkel wird das Strahlenbündel 3 in Richtung der Umfangsspiegelsystemachse 9 und damit der Werkstückachse 11 abgelenkt. Damit wird der Arbeitsbereich 10 vergrößert.

Eine solche Lösung hat auch den Vorteil, dass ein Strahlenbündel 3 gesichert nicht mehrfach an den gleichen Stellen des Umfangsspiegels 5 reflektiert wird, was eine geringere thermische Belastung des Umfangsspiegels 5 bedeutet.

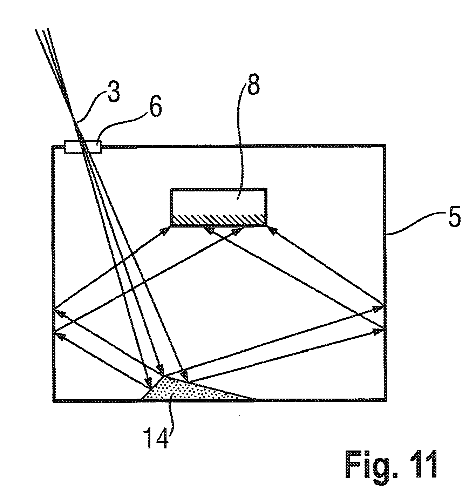

Mit einem neunten Ausführungsbeispiel, gezeigt in Fig. 11, soll aufgezeigt werden, dass auch nur eine teilweise Umfangsbearbeitung eines Werkstückes 8 möglich ist. Die Strahlparameter des Strahlenbündels 3 und der Querschnitt des Umfangsspiegels 5 sowie dessen Dimension in Verbindung mit einem zusätzlichen Spiegelelement 14 wurde so ausgewählt, dass das Strahlenbündel 3 nach Strahlteilung und zweifacher Reflexion vollständig auf eine Seite eines Werkstückes 8, hier ein bandförmiger Materialstrang, auftrifft.

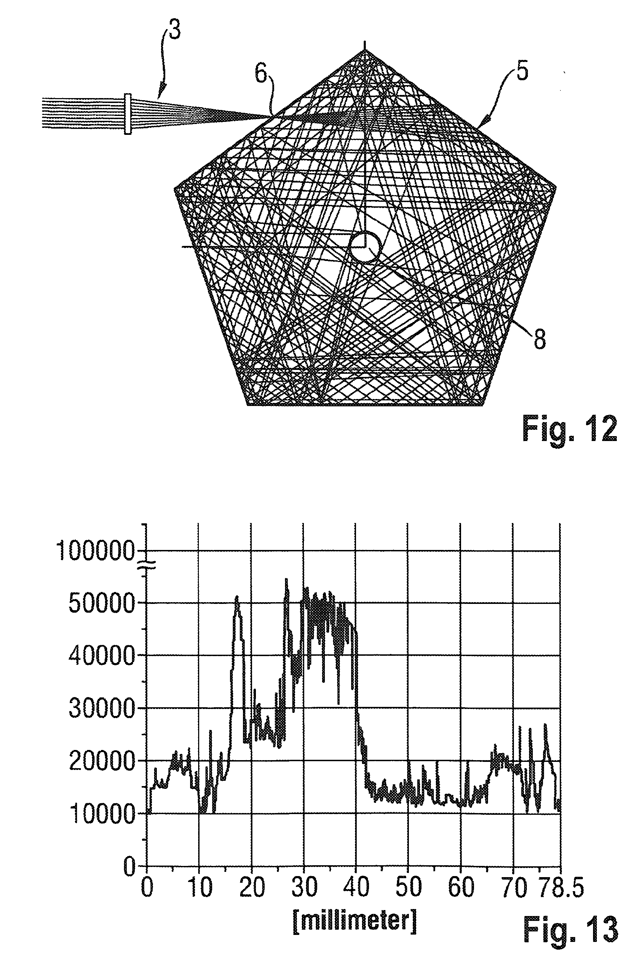

Ein zehntes Ausführungsbeispiel soll anhand der Fig. 12 und der Fig. 13 erläutert werden.

Für einen Umfangsspiegel 5, gebildet durch einen zylinderförmigen Spiegel mit einem 5-Eck als Querschnitt, mit Kantenlängen von 72,75 mm und einem Reflexionsgrad von 99,8%, wurde die resultierende Energieverteilung am Umfang eines Werkstückes 8 mit zehntausend Strahlen bei einem Schwellwert von 5% gerechnet.

In Fig. 12 wurde hierfür der Strahlenverlauf dargestellt, wobei in der Darstellung nur zehn Strahlen des Strahlenbündels 3 gezeigt sind, um noch eine visuelle Auflösung zu gewährleisten.

Fig. 13 zeigt in einem Diagramm die Anzahl der auftreffenden Strahlen des Strahlenbündels 3, die einer Verteilung der Strahlungsenergie äquivalent ist, welche durch das Auftreffen der Strahlenbündel 3 auf das Werkstück 8, über dessen Umfang verteilt, in dieses eingebracht wurde.

Das Werkstück 8 ist ein Materialstrang mit einem Absorptionsgrad von 99,8 % und einem Durchmesser von 25 mm, woraus sich ein Umfang für das Werkstück 8 von ca. 78,5 mm ergibt.

Ein in den Umfangsspiegel 5 eingekoppeltes Strahlenbündel 3 weist einen halben Öffnungswinkel α von 6,4° auf und ist in der Strahleintrittsöffnung 6 in einer Fokuslinie gebündelt.

Sieht man sich den dargestellten Kurvenverlauf an, erkennt man Umfangsabschnitte, z.B. im Bereich von 43-65 mm, bei dem der Kurvenverlauf innerhalb eines relativ schmalen Toleranzbandes bleibt. Man erkennt aber auch Umfangsabschnitte mit starken Kurven-Ausschlägen, wie sie einer homogenen Umfangsbearbeitung nicht genügen.

Schon eine Strahlteilung vor der ersten Reflexion im Umfangsspiegel 5 würde zu einer Überlagerung mit dem spiegelverkehrten Kurvenverlauf bei halbierter Strahlenanzahl führen und so zu einer deutlichen Homogenisierung des Energieeinfalls auf das Werkstück 8 führen.

Für das Bearbeitungsziel des vollständigen Trennens des Werkstückes 8 kann eine hier dargestellte Verteilung jedoch durchaus schon ausreichend sein. Für einen definierten Abtrag über den Umfang hingegen müssen Maßnahmen getroffen werden, mit denen der Verlauf der Strahlen so beeinflusst wird, dass die Verteilungskurve über den gesamten Umfangsbereich innerhalb eines angemessenen Toleranzbandes bleibt.

Eine gleichmäßigere Verteilung wird erreicht bei einer Vergrößerung des Größenverhältnisses zwischen dem Werkstück 8 und dem Umfangsspiegel 5 sowie durch die umfangreich in den Ausführungsbeispielen erläuterten Maßnahmen zur Formung und Teilung des Strahlenbündels 3.

Auch kann eine Homogenisierung auf einfache Weise erreicht werden, indem das Werkstück 8 während der Bearbeitung um seine Werkstückachse 11 gedreht wird.

Wie bereits dargelegt, können das Werkstück 8 und die Vorrichtung während der Bearbeitung zueinander in Ruhe verharren oder aber in relativer Bewegung zueinander sein. Die relative Ruhelage zueinander kann erreicht werden, indem das durch die Bearbeitungskammer 13 mit einer konstanten Geschwindigkeit geführte Werkstück 8 für die Zeit der Bearbeitung angehalten wird oder aber vorteilhaft, indem das optische System dem Werkstück 8 nachgeführt wird. Damit kann die Einwirkzeit der Laserstrahlung erhöht werden.

Alle vorbenannten Ausführungsbeispiele zeigen, dass das Verfahren und die Vorrichtung insbesondere in Abhängigkeit vom Querschnitt des Werkstückes 8 und dem Bearbeitungsziel vorteilhaft unterschiedlich ausgeführt werden kann. Dem Fachmann sind eine Vielzahl von Anregungen gegeben, um über diese Auswahl zu einem optimalen Ergebnis zu kommen.

### Bezugszeichenliste

- 1: Laser
- 2: erste Strahlformungsoptik
- 3: Strahlenbündel
- 3.1-3.n: ausgezeichnete Strahlen des Strahlenbündels
- 3.1^{m}-3.n^{m}: ausgezeichnete Strahlen des Strahlenbündels nach m-ter Reflexion
- 4: zweite Strahlformungsoptik
- 5: Umfangsspiegel
- 6: Strahleintrittsöffnung
- 7: Durchführöffnung
- 8: Werkstück
- 9: Umfangsspiegelsystemachse
- 10: Arbeitsbereich
- 11: Werkstückachse
- 12: Flächennormale
- 13: Bearbeitungskammer
- 14: zusätzliches Spiegelelement
- 15: optische Achse

- α: halber Öffnungswinkel
- β: Neigungswinkel

- R_{SP}: Krümmungsradius
- Rᵢ: Grenzradius
- R_{W}: Werkstückradius

## Patentansprüche

1. Vorrichtung zur Umfangsbearbeitung eines Werkstückes (8), mit einem optischen System, welches eine optische Achse (15) aufweist und zu welcher ein Laser (1) gehört, der ein Strahlenbündel (3) entlang der optischen Achse (15) emittiert, sowie einem Umfangsspiegel (5), mit einer Umfangsspiegelsystemachse (9), der um das zu bearbeitende Werkstück (8), das eine Werkstückachse (11) aufweist, so angeordnet ist, dass die Umfangsspiegelsystemachse (9) und die Werkstückachse (11) in gleicher Richtung ausgerichtet sind, **dadurch gekennzeichnet,**
**dass** der Umfangsspiegel (5) am Umfang eine Strahleintrittsöffnung (6) aufweist, zu der das optische System so angeordnet ist, dass das Strahlenbündel (3) mit der optischen Achse (15) senkrecht zur Umfangsspiegelsystemachse (9) in den Umfangsspiegel (5) eingekoppelt wird und nach mehrfacher Reflexion am Umfangsspiegel (5) auf das Werkstück (8) auftrifft.

2. Vorrichtung nach Anspruch 1, **dadurch gekennzeichnet,**
**dass** der Umfangsspiegel (5) von einer Bearbeitungskammer (13) umschlossen ist, die ebenfalls eine Strahleintrittsöffnung (6) sowie zwei Durchführöffnungen (7) aufweist, durch die hindurch das zu bearbeitende Werkstück (8) in Richtung seiner Werkstückachse (11) durch die Bearbeitungskammer (13) geführt ist.

3. Vorrichtung nach Anspruch 1, **dadurch gekennzeichnet,**
**dass** das optische System eine erste Strahlformungsoptik (2) zur Durchmesserveränderung und Parallelisierung des vom Laser (1) emittierten Strahlenbündels (3) umfasst und eine zweite Strahlformungsoptik (4) vorhanden ist, zur Fokussierung des Strahlenbündels (3) in der X-Y-Ebene, die eine senkrechte Ebene zu der durch die optische Achse (15) und die Umfangsspiegelsystemachse (9) definierten Y-Z-Ebene ist.

4. Vorrichtung nach Anspruch 3, **dadurch gekennzeichnet,**
**dass** die zweite Strahlformungsoptik (4) so ausgelegt ist, dass eine sich ausbildende Fokuslinie in einer Strahleintrittsöffnung (6) liegt.

5. Vorrichtung nach Anspruch 1, **dadurch gekennzeichnet,**
**dass** der Umfangsspiegel (5) die Form eines Hohlkörpers hat, dessen innere Mantelfläche eine Spiegelfläche bildet, deren Flächennormalen (12) in jedem Punkt der Spiegelfläche senkrecht auf der Umfangsspiegelsystemachse (9) stehen.

6. Vorrichtung nach Anspruch 1, **dadurch gekennzeichnet,**
**dass** der Umfangsspiegel (5) die Form eines Hohlkörpers hat, dessen innere Mantelfläche eine Spiegelfläche bildet, deren Flächennormalen (12) in jedem Punkt der Spiegelfläche einen Winkel, der kleiner 90° ist, mit der Umfangsspiegelsystemachse (9) einschließen.

7. Vorrichtung nach Anspruch 5 oder 6, **dadurch gekennzeichnet,**
**dass** die Spiegelfläche sich aus einer Vielzahl von Teilflächen zusammensetzen kann, die Ecken miteinander einschließen und deren Anzahl, Geometrie und Anordnung zueinander für den Querschnitt des Umfangsspiegels (5) bestimmend ist.

8. Vorrichtung nach Anspruch 1, **dadurch gekennzeichnet,**
**dass** im Innenraum des Umfangsspiegels (5) wenigstens ein zusätzliches Spiegelelement (14) vorhanden ist.

9. Vorrichtung nach Anspruch 8, **dadurch gekennzeichnet,**
**dass** das zusätzliche Spiegelelement (14) ein rotierender Polygonspiegel ist.

10. Vorrichtung nach Anspruch 7, **dadurch gekennzeichnet,**
**dass** wenigstens eine Ecke oder eine Teilfläche als sphärische oder asphärische Fläche ausgebildet ist.

11. Vorrichtung nach Anspruch 1, **dadurch gekennzeichnet,**
**dass** eine zusätzliche Strahleintrittsöffnung (6) und ein zweites optisches System vorhanden sind, um zwei Strahlenbündel (3) in den Umfangsspiegel (5) einzukoppeln.

12. Vorrichtung nach Anspruch 1, **dadurch gekennzeichnet,**
**dass** wenigstens eine Bewegungseinrichtung vorhanden ist, die geeignet ist, eine Relativbewegung zwischen dem optischen System, dem Umfangsspiegel (5) und dem Werkstück (8) zu erzeugen.

13. Verfahren zur Umfangsbearbeitung eines Werkstückes (8) mittels Laser (1),
bei dem ein Umfangsspiegel (5) mit einer Umfangsspiegelsystemachse (9) bereitgestellt wird und ein Werkstück (8), mit einer Werkstückachse (11), so in den Umfangsspiegel (5) eingeführt wird, dass die Umfangsspiegelsystemachse (9) und die Werkstückachse (11) in einer Richtung verlaufen, **dadurch gekennzeichnet,**
**dass** über eine vorgegebene Bearbeitungszeit ein von dem Laser (1) emittiertes Strahlenbündel (3) entlang einer optischen Achse (15) senkrecht zur Umfangsspiegelsystemachse (9) in den Umfangsspiegel (5) eingekoppelt wird und an dessen Spiegelfläche mehrfach reflektiert wird, bis es auf das Werkstück (8) auftrifft.

14. Verfahren nach Anspruch 13, **dadurch gekennzeichnet,**
**dass** das Strahlenbündel (3) vor dessen Eintritt in den Umfangsspiegel (5) parallelisiert wird und in senkrechter Richtung zur Umfangsspiegelsystemachse (9) fokussiert wird.

15. Verfahren nach Anspruch 13, **dadurch gekennzeichnet,**
**dass** das Werkstück (8) während der Bearbeitungszeit entlang seiner Werkstückachse (11) relativ zur Umfangsspiegelsystemachse (9) bewegt wird und/oder um seine Werkstückachse (11) gedreht wird.

## Claims

1. A device for machining the circumference of a workpiece (8), said device comprising an optical system which has an optical axis (15) with an associated laser (1) which emits a beam (3) along the optical axis (15), as well as a circumferential mirror (5), which has a circumferential mirror system axis (9) and is arranged in such a way around the workpiece (8) to be machined, which has a workpiece axis (11), that the circumferential mirror system axis (9) and the workpiece axis (11) are oriented in the same direction, **characterised in that**
the circumferential mirror (5) has a beam inlet opening (6) at the circumference, the optical system being arranged with respect to the beam inlet opening (6) such that the beam (3) is coupled into the circumferential mirror (5) with the optical axis (15) perpendicular to the circumferential mirror system axis (9) and impinges on the workpiece (8) after multiple reflections by the circumferential mirror (5).

2. The device according to claim 1, **characterised in that** the circumferential mirror (5) is enclosed by a machining chamber (13), which also has a beam inlet opening (6) as well as two passage openings (7) through which the workpiece (8) to be machined is guided in the direction of its workpiece axis (11) through the machining chamber (13).

3. The device according to claim 1, **characterised in that** the optical system comprises a first beam-shaping lens system (2) for changing the diameter and for parallelising the beam (3) emitted by the laser (1) and that a second beam-shaping lens system (4) is present to focus the beam (3) in the X-Y plane, which is a plane perpendicular to the Y-Z plane defined by the optical axis (15) and the circumferential mirror system axis (9).

4. The device according to claim 3, **characterised in that** the second beam-shaping lens system (4) is designed such that a resulting focal line lies in a beam inlet opening (6).

5. The device according to claim 1, **characterised in that** the circumferential mirror (5) has the shape of a hollow body whose inner circumferential face forms a mirror surface whose surface normals (12) are perpendicular to the circumferential mirror system axis (9) in any point of the mirror surface.

6. The device according to claim 1, **characterised in that** the circumferential mirror (5) has the shape of a hollow body whose inner circumferential face forms a mirror surface whose surface normals (12) enclose an angle of less than 90° with the circumferential mirror system axis (9) in any point of the mirror surface.

7. The device according to claim 5 or 6, **characterised in that** the mirror surface may be composed of a plurality of partial surfaces which enclose corners with each other and whose number, geometry and arrangement with respect to each other are decisive for the cross section of the circumferential mirror (5).

8. The device according to claim 1, **characterised in that** at least one additional mirror element (14) is present in the interior space of the circumferential mirror (5).

9. The device according to claim 8, **characterised in that** the additional mirror element (14) is a rotating polygonal mirror.

10. The device according to claim 7, **characterised in that** at least one corner or one partial surface is provided as a spherical or aspherical surface.

11. The device according to claim 1, **characterised in that** an additional beam inlet opening (6) and a second optical system are present to couple two beams (3) into the circumferential mirror (5).

12. The device according to claim 1, **characterised in that** at least one movement device is present which is suitable to produce a relative movement between the optical system, the circumferential mirror (5) and the workpiece (8).

13. A method for machining the circumference of a workpiece (8) by means of a laser (1), wherein a circumferential mirror (5) with a circumferential mirror system axis (9) is provided and a workpiece (8) with a workpiece axis (11) is introduced into the circumferential mirror (5) such that the circumferential mirror system axis (9) and the workpiece axis (11) extend in one direction, **characterised in that**,
during a predetermined machining period, a beam (3) emitted by the laser (1) is coupled into the circumferential mirror (5) along an optical axis (15) perpendicular to the circumferential mirror system axis (9) and is reflected multiple times by the mirror surface before impinging on the workpiece (8).

14. The method according to claim 13, **characterised in that** the beam (3) is parallelised before entering the circumferential mirror (5) and is focused perpendicular to the circumferential mirror system axis (9).

15. The method according to claim 13, **characterised in that** the workpiece (8) is moved along its workpiece axis (11) relative to the circumferential mirror system axis (9) and/or is rotated about its workpiece axis (11) during the machining period.

## Revendications

1. Dispositif d'usinage circonférentiel d'une pièce (8), ledit dispositif comprenant un système optique présentant un axe optique (15) auquel appartient un laser (1) émettant un faisceau (3) selon l'axe optique (15), ledit dispositif comprenant en outre un miroir circonférentiel (5) qui présente un axe de système à miroir circonférentiel (9) et qui est disposé autour de la pièce (8) à usiner, qui présente un axe de pièce (11), de sorte que l'axe de système à miroir circonférentiel (9) et l'axe de pièce (11) soient orientés dans le même sens, **caractérisé en ce que**
le miroir circonférentiel (5) présente sur sa circonférence une ouverture d'entrée de faisceau (6) par rapport à laquelle le système optique est disposé de sorte que le faisceau (3) soit couplé dans le miroir circonférentiel (5), l'axe optique (15) étant perpendiculaire à l'axe de système à miroir circonférentiel (9), et que le faisceau (3) atteigne la pièce (8) après multiples réflexions par le miroir circonférentiel (5).

2. Dispositif selon la revendication 1, **caractérisé en ce que** le miroir circonférentiel (5) est entouré d'une chambre d'usinage (13), qui présente également une ouverture d'entrée de faisceau (6) ainsi que deux ouvertures de passage (7) par lesquelles la pièce (8) à usiner est guidée, dans le sens de son axe de pièce (11), à travers la chambre d'usinage (13).

3. Dispositif selon la revendication 1, **caractérisé en ce que** le système optique comprend une première optique de formation de faisceau (2) destinée à modifier le diamètre et à paralléliser le faisceau (3) émis par le laser (1) et **en ce qu'**il y a une deuxième optique de formation de faisceau (4) destinée à focaliser le faisceau (3) dans le plan X-Y qui est un plan perpendiculaire au plan Y-Z défini par l'axe optique (15) et l'axe de système à miroir circonférentiel (9).

4. Dispositif selon la revendication 3, **caractérisé en ce que** la deuxième optique de formation de faisceau (4) est réalisée de sorte qu'une ligne focale se formant soit disposée dans une ouverture d'entrée de faisceau (6).

5. Dispositif selon la revendication 1, **caractérisé en ce que** le miroir circonférentiel (5) se présente sous la forme d'un corps creux dont l'enveloppe intérieure constitue une face de miroir dont les normales de surface (12) sont perpendiculaires à l'axe de système à miroir circonférentiel (9) dans chaque point de la face de miroir.

6. Dispositif selon la revendication 1, **caractérisé en ce que** le miroir circonférentiel (5) se présente sous la forme d'un corps creux dont l'enveloppe intérieure constitue une face de miroir dont les normales de surface (12) renferment un angle de moins de 90° avec l'axe de système à miroir circonférentiel (9) dans chaque point de la face de miroir.

7. Dispositif selon la revendication 5 ou 6, **caractérisé en ce que** la face de miroir peut être composée d'une pluralité de faces partielles qui renferment des coins entre eux et dont le nombre, la géométrie et l'arrangement des unes par rapport aux autres déterminent la section transversale du miroir circonférentiel (5).

8. Dispositif selon la revendication 1, **caractérisé en ce qu'**il y a au moins un élément de miroir (14) additionnel dans l'espace intérieur du miroir circonférentiel (5).

9. Dispositif selon la revendication 8, **caractérisé en ce que** ledit élément de miroir (14) additionnel est un miroir polygonal rotatif.

10. Dispositif selon la revendication 7, **caractérisé en ce qu'**au moins un coin ou une face partielle présente une forme sphérique ou asphérique.

11. Dispositif selon la revendication 1, **caractérisé en ce qu'**il y a une ouverture d'entrée de faisceau (6) additionnelle et un deuxième système optique pour coupler deux faisceaux (3) dans le miroir circonférentiel (5).

12. Dispositif selon la revendication 1, **caractérisé en ce qu'**il y a au moins un dispositif de déplacement apte à effectuer un déplacement relatif entre le système optique, le miroir circonférentiel (5) et la pièce (8).

13. Procédé d'usinage circonférentiel d'une pièce (8) par utilisation d'un laser (1), dans lequel procédé on prévoit un miroir circonférentiel (5) avec un axe de système à miroir circonférentiel (9), et une pièce (8) avec un axe de pièce (11) est introduite dans le miroir circonférentiel (5) de sorte que l'axe de système à miroir circonférentiel (9) et l'axe de pièce (11) s'étendent dans le même sens, **caractérisé en ce que**,
pendant un temps d'usinage prédéterminé, un faisceau (3) émis par le laser (1) est couplé dans le miroir circonférentiel (5) selon un axe optique (15) perpendiculaire à l'axe de système à miroir circonférentiel (9) et ledit faisceau (3) est réfléchi plusieurs fois par la face de miroir avant d'atteindre la pièce (8).

14. Procédé selon la revendication 13, **caractérisé en ce que** le faisceau (3), avant d'entrer dans le miroir circonférentiel (5), est parallélisé et focalisé perpendiculairement à l'axe de système à miroir circonférentiel (9).

15. Procédé selon la revendication 13, **caractérisé en ce que**, pendant le temps d'usinage, la pièce (8) est déplacée selon son axe de pièce (11) par rapport à l'axe de système à miroir circonférentiel (9) et/ou est tournée autour de son axe de pièce (11).
